# EUROPEAN PATENT APPLICATION

(11) **EP 2 816 868 A1**
(43) Date of publication of application: **24.12.2014**
(21) Application number: 14170245.6
(22) Date of filing: 28.05.2014
(51) Int. Cl.: H04W 88/04, H04L 12/28, H04N 7/10, H04B 7/155, H04W 88/08

(54) **Device, system and method for indoor distribution of cellular and broadcast television signals**

(30) Priority: 29.05.2013 FI 20135592
(71) Applicant: DNA Oy, 00620 Helsinki (FI)
(72) Inventor: Knuuttila, Olli, 00620 Helsinki (FI); Viitanen, Pekka, 00620 Helsinki (FI)
(74) Representative: Värilä, Risto Sakari

(57) **Abstract**

Device (101b, 102, 102B, 102C) for indoor (101a) distribution of multiple received information signals, comprising an antenna interface (130, 114a, 116a) for receiving a plurality of RF signals, said plurality of RF signals including a digital terrestrial broadcast television signal, e.g. DVB-T, and a number of downlink cellular signals including Long Term Evolution LTE air interface signals, further comprising a signal routing portion (132, 104, 106, 108, 110) for processing the received RF signals, preferably including combining the received RF signals into an aggregate signal, and a distribution interface (134) for distributing the processed signal(s), preferably the aggregate signal, towards a number of terminal devices (119, 119B, 119C) utilizing indoor coaxial (television) cabling (112), wherein the device has been configured to operate at least in passive mode requiring no dedicated internal or external power source.

A system incorporating such a device and a related method are presented.

## Description

### FIELD OF THE INVENTION

The present invention relates generally to communications and broadcasting. In particular, however not exclusively, the invention pertains to indoor distribution of cellular and television signals.

### BACKGROUND

Already in many contemporary use scenarios different physical obstacles attenuate wireless information signals to an extent that their reception turns out difficult or impossible at the receiver(s). In addition to major topological barriers such as mountains or mountain ranges in extreme cases, urban environments incorporating buildings and walls are particularly challenging in terms of preserving the necessary signal quality required for duly receiving and decoding the payload of the wireless signal. Simply increasing the transmission power at transmitter stations such as so-called base stations in connection with cellular systems is usually not a sufficient solution as the followed radio standards and common regulations typically provide rather strict guidelines on the allowable maximum power so that the related RF pollution and generally electrical pollution causing electrical disturbances and even health problems to sensitive individuals is minimized.

Considering especially indoor distribution of wireless signals, modern housing trends induce additional burden thereon as while the energy efficiency can truly be enhanced in the context of low-energy houses by utilizing thick, well-insulating building materials and structures, the same structures undoubtedly attenuate the external wireless signals rather effectively when the signals enter the building or other similar indoor space by penetrating through walls made of such materials and structures. The weakened wireless signals can cause problems to such critical services like emergency calls and solutions to this have to be planned.

LTE referring to Long Term Evolution is an early 4G or 'almost 4G', depending on the standpoint, standard for high-speed wireless communication based on GSM (Global System for Mobile Communications)/EDGE (Enhanced Data Rates for GSM Evolution) and UMTS (Universal Mobile Telecommunications System)/HSPA (High Speed Packet Access) technologies. Maximum download rates achievable may be several hundreds of Mbit/s or even more according to the current specifications, which enables delivering data extensive services such as mobile TV to the compatible terminals. Enhanced LTE called 'LTE Advanced' is supposed to fulfill all 4G (as defined by IMT-2000, International Mobile Telecommunications Advanced) requirements set by ITU-T thus becoming a fully recognized 4G standard for high-speed wireless communication.

Eventually the LTE will take over some UHF frequencies traditionally allocated to terrestrial television signals as the implementations of LTE may apply frequencies from hundreds of MHz to few GHz's thus overlapping or closely neighboring with the frequencies originally reserved for television broadcasting such as DVB-T (Digital Video Broadcasting, Terrestrial) terrestrial broadcasting in many areas. Concerns have been thus arisen on whether these systems running in parallel will cause annoying level of interference to each other.

The previously described problems regarding achieving decent indoor coverage may begin to emerge even in larger extent with the wider scale adoption of the LTE technology and corresponding delicate solutions supporting high data bandwidths and having also potential further sources of signal degradation around.

### SUMMARY

The objective of the present invention is to alleviate the problem described above and to facilitate the transfer of RF signals in urban environments, such as buildings and various complexes, suffering from RF signal degradation including attenuation.

The objective is met by a device, system, and method in accordance with the present invention.

Indeed, in one aspect of the present invention, a device is provided for indoor distribution of multiple received information signals, comprising
antenna interface for receiving a plurality of RF signals, said plurality of RF signals including a digital terrestrial broadcast television signal, optionally DVB-T(2) compliant signal, and a number of downlink cellular signals including LTE air interface signal and preferably a number of predetermined other 3GPP (3rd Generation Partnership Project) such as 3G standard compliant air interface signal(s),
signal routing portion for processing the received RF signals, preferably including combining the received RF signals into an aggregate signal, and
distribution interface for distributing the processed signal(s), preferably the aggregate signal, towards a number of terminal devices utilizing coaxial cabling, such as coaxial television cabling,
wherein the device has been configured to operate at least in passive mode requiring no dedicated internal or external power source.

Preferably, the device is also configured to enable uplink transmission for the cellular, advantageously at least LTE and/or cellular voice, signals. The device may receive the uplink signal(s) also via the distribution interface, preferably via the same connector as being applied for downlink signal and television signal distribution, and route it accordingly in reverse direction towards the associated antenna(e) via the antenna signal interface.

In one embodiment, the antenna interface comprises a number of connectors for interfacing antenna(e) or, in practice, related antenna cable(s) such as coaxial antenna cables. Each antenna (cable) may provide one or more RF signals captured by the associated antenna(e) to the device. There may be intermediate elements such as antenna amplifiers in the signal path. One connector may be configured to receive at least the television signal captured by an associated antenna. At least one other connector may be configured to receive a cellular signal such as the LTE air interface signal and/or 3G (or generally 3GPP) air interface signal.

In another, potentially supplementary, embodiment the antenna interface comprises a number of antennae for receiving RF signals. One antenna may be configured for capturing at least the television signal. At least one other antenna may be configured to capture a cellular signal such as the LTE air interface signal and/or other 3GPP air interface signal.

In a further, either supplementary or alternative, embodiment the distribution interface comprises a connector, optionally exclusively said connector, adapted to receive a coaxial (antenna) cable. Optionally the output interface may further include a second connector adapted to receive a data cable for transferring data to and optionally from a LTE-compliant data terminal. In such a case, the device may further comprise a number of elements such as filters adapted to separate the aggregated television and mobile signals according to predetermined logic for output via the dedicated connectors.

Still in a further, either supplementary or alternative, embodiment the signal routing portion comprises at least one element selected from the group consisting of: a combiner, duplexer, coupler, multi-coupler, multiplexer, diplexer, filter, splitter, reversed splitter, echo cancellation circuit, and amplifier.

Naturally in some embodiments a number of elements potentially present in the routing portion and device in general may be active and consume energy for the overall operation thereof, whereupon the device may incorporate an internal power source (or at least connector therefor), such as optionally rechargeable battery, or a connector for an external power source such as mains, for instance. Thereby, in addition to passive mode, the device may support active mode yielding additional processing capability such as true signal amplification with a number of amplifiers, active processing circuit(s), etc. Various functionalities (relating e.g. to the cellular services) provided or supported by the device may be similar in several modes such as the passive and active mode. However, they may also differ between the modes depending on the embodiment. In some embodiments, a number of functionalities present in the active mode are not supported in the passive mode. These functionalities may require using a power source available only in the active mode, for instance. Wireless power transmission may be optionally supported and the device may incorporate necessary components for energy capture utilizing e.g. the principles of electromagnetic induction, radiation and/or electrical conduction.

Yet in a further, either supplementary or alternative, embodiment the supported 3GPP technologies include at least one element selected from the group consisting of: GSM, UMTS, CDMA2000 and GSM EDGE.

In another aspect, a system for indoor distribution of multiple received information signals is provided, comprising an embodiment of the aforesaid device. The system may further comprise cabling such as coaxial cabling preferably at least partially installed as in-wall type cabling, i.e. within structures such as walls, ceilings and/or floors. Yet, the system may incorporate a plurality of sockets such as 'wall sockets' electrically coupled to the cabling. Further, the system may include a number of electronic terminal devices or generally elements configured to receive the distributed signal(s) and/or transmit uplink signal(s) via the sockets and cabling. These may include cellular data such LTE (compliant) devices such as LTE<->(W)LAN ((Wireless) Local Area Network) conversion devices, cellular or LTE data modems, indoor antennae, filter-including devices e.g. for separating television and cellular signals, etc. The LTE device may be configured to transfer data in uplink direction via the same cabling and essentially cable, or the LTE device may be configured to transmit uplink data using a different transfer medium, optionally wirelessly. Ordinary wireless cellular terminals such as 3G and LTE terminals may receive downlink data and/or voice service via dedicated indoor antennae and/or via leaky cabling when located within the associated range.

Still further, the system may include a number of signal dividing or combining elements such as taps and/or splitters. Preferably, star topology is applied in the cabling such that there is a main distribution block provided with e.g. splitter or tap whereto the sockets (cables) are connected. Further distribution blocks for providing finer grid of socket topology may be utilized as well.

In a further aspect, a method for indoor distribution of multiple received information signals to be performed by an electronic device, comprises
obtaining an electronic device for signal distribution between a number of antennae and terminal devices remotely located from the antennae, said electronic device configured to operate at least in passive mode requiring no dedicated internal or external power source,
receiving, at the antenna interface of the electronic device, a plurality of RF signals, said plurality of RF signals including a digital terrestrial broadcast television signal, optionally DVB-T(2) compliant signal, and a number of cellular signals including LTE air interface signal and preferably a number of predetermined 3G standard compliant air interface signal(s),
processing, preferably combining, the received RF signals at the electronic device into an aggregate signal, and
distributing, at the distribution interface of the electronic device, the processed signal(s) towards a number of terminal devices utilizing coaxial cabling.

In one embodiment, the method further comprises receiving uplink cellular signal, preferably LTE data signal and/or cellular voice service signal, at the distribution interface and outputting the cellular signal via the antenna interface. The method may incorporate processing the uplink signal or aggregate signal including the uplink signal prior to output via the antenna interface. A common connector may be utilized for both uplink and downlink. Processing may comprise routing, filtering, amplifying, etc.

The utility of the present invention arises from a variety of issues depending on each particular embodiment thereof. The range of cellular signals such as high-speed LTE signals and/or cellular voice service signals may be cleverly expanded to inside highly insulating structures such as modern passive houses. The existing (television) signal distribution infrastructure regarding e.g. cabling, most potentially coaxial cabling, being pre-installed in the structures and provided with a number of sockets for different terminal devices may be conveniently and effectively exploited in the arrangement disclosed herein.

The electronic device suggested to participate in signal distribution may operate at least in passive mode meaning disturbances in power delivery do not affect the functioning thereof, whereupon e.g. vital cellular communication including emergency calls can still be routed between indoors and outdoors. The device may be installed at a master (signal) distribution location of the building such as an electrical cabinet or distribution board receiving cables from the antenna(e) and coaxial sockets spread inside the building. Yet, a plurality of dedicated antennae and/or a common antenna shared by at least two signals for receiving/transmitting television broadcast and cellular data or voice may be utilized depending on the invention. Contemporary consumer electronics remains fully applicable as necessary conversion terminals and/or mere filters may be provided between them and the device when necessary.

The expression "a number of" refers herein to any positive integer starting from one (1), e.g. to one, two, or three.

The expression "a plurality of" refers herein to any positive integer starting from two (2), e.g. to two, three, or four.

The terms "first" and "second" do not denote herein any particular priority or order. Instead, they are used to distinguish one entity such as a physical or logical element from another entity.

Various embodiments of the present invention are presented in the dependent claims and detailed description below.

### BRIEF DESCRIPTION OF THE DRAWINGS

Next the invention will be described in more detail, in connection with preferred embodiments, with reference to the following drawings, where:
Fig. 1 illustrates an embodiment of a device in accordance with the present invention and related system.
Fig. 2 illustrates a variation of the embodiment of Fig. 1.
Fig. 3 illustrates another variation of the embodiment of Fig. 1.
Fig. 4 is a flow diagram of a method in accordance with the present invention.

### DETAILED DESCRIPTION

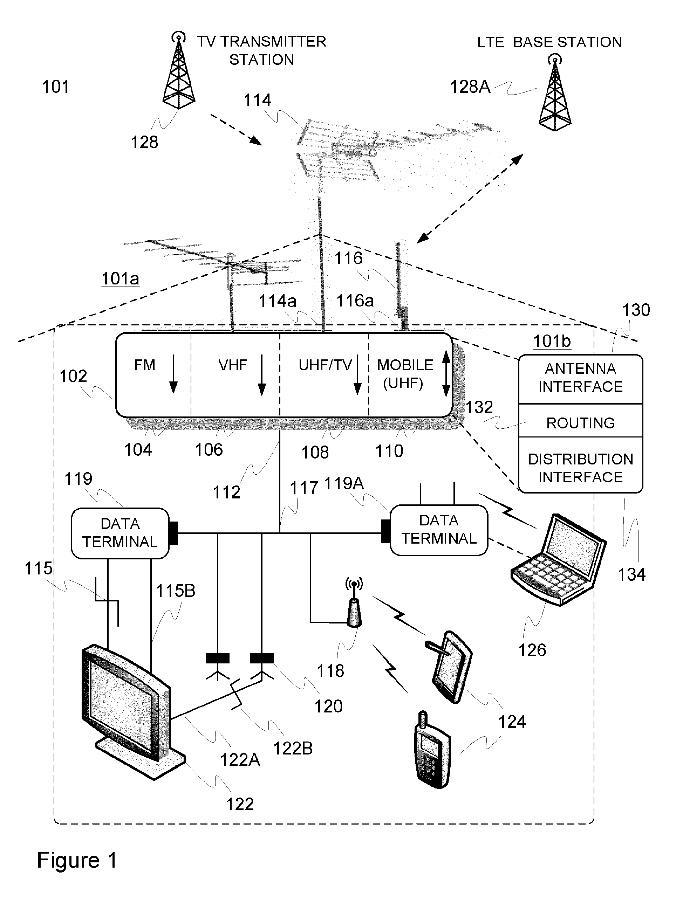

Figure 1 illustrates, at 101, an embodiment of the device and related system of the present invention. A building 101a, such as a private house or an office building, is provided with an embodiment of an electronic device 102 for distributing RF signals originally wirelessly emitted by a number of transmit stations including a television broadcasting tower 128 and cellular base station(s) 128A, preferably at least LTE capable base station. The device 102 may be a passive device not requiring a power source, or at least it preferably supports passive operation (mode) not requiring it. It shall thus include at least a number of passive components and circuitry for enabling at least limited passive operation. The mode may be configurable and it may also switch automatically in response to power source availability e.g. upon power outage situations (active->passive and optionally back to active).

The RF signals are captured by a number of antennae 114, 116 such as a UHF, VHF or UHF/VHF antenna 114 for television signal reception and optionally at least one dedicated cellular antenna 116 (e.g. an omnidirectional stick antenna or a directional antenna) for cellular signal such as 3G and/or LTE signal reception, which may generally refer to voice and/or data signal reception. From the antenna(e) the captured signals may be funneled to the device 102 e.g. via feasible cabling (at least one cable) and optional intermediate elements such as antenna amplifiers or diplexers.

Generally, multiple antennae optimized for dedicated frequency ranges and/or a wide spectrum antenna(e) such as a log-periodic antenna may be utilized. Antenna(e) may be installed on the rooftop of a target building, for example. Directional antenna(e) may be aligned towards the broadcast station/base station using applicable measurement gear for maximizing the signal power of the received signal.

The device 102 may incorporate a number of processing branches 104, 106, 108, 110 for the funneled signals, such as FM, VHF, UHF and one or more cellular signals (e.g. LTE). Such processing branches may, for example, combine, split, amplify, and/or filter the associated signals among other potential tasks. For the tasks, the branches may include a number of dedicated and/or shared components/circuitry as well as different necessary wires, cables, and/or conductors.

At 101b, a coarse functional representation of the device's 102 potential internals is shown for illustrative purposes only with three internal blocks, namely antenna interface 130, routing block 132, and distribution interface 134.

In the shown embodiment, cellular data and voice transfer is bi-directional having regard to at least one cellular radio technology such as LTE, whereby the device 102 also routes these uplink signals between the associated indoor terminal device(s) and the antenna(e), wherein duplexing such as frequency domain duplexing may be advantageously applied to support multi-directional information transfer using the same transfer medium (cables, conductors, etc.). Preferably, same cables and related other elements such as connectors 114, 116a are indeed used for both data transfer directions naturally depending on the requirements set by the concerned standards regarding e.g. the use of paired band FDD (frequency-division duplexing) and unpaired TDD (time-division duplexing) duplex schemes.

The device 102 is coupled to the existing indoor signal distribution network, preferably coaxial cabling, via a distribution interface 134 providing the broadcast and cellular signal(s) forward and comprising e.g. at least one coaxial connector for a coaxial cable 112 that may in some embodiments transfer most or all the information signals between the device 102 and the various indoor apparatuses (case shown in Fig. 1), i.e. the indoor cabling is at least partially common among the broadcast and cellular signals. The device 102 may be functionally, i.e. electrically, connected via the cable 112 e.g. to a star topology distribution point 117 such as a splitter or tap that is, for its part, connected to sockets ('wall plugs') 120 whereto the terminal devices 114, 114A may be coupled either directly or via a connecting cable. In some embodiments, a 'master' line may be utilized to distribute the signal with taps in connection with drop lines.

Preferably, the cabling is routed within protective structures such as walls in appropriate cable ducts. Alternatively or additionally, surface mounted cable runs may be utilized as a more straightforward installation option e.g. in connection with cabling retrofits.

Data terminal 119A refers to an electronic device that is capable of autonomously receiving the information signal(s) provided by the device 102 and optionally transmitting uplink signal thereto. One shall understand that data terminal equipment is not, in the context of the present invention, necessarily an absolute communication end point. Namely, such device may include e.g. an LTE <-> WiFi conversion device or similar 'access point' enabling local user terminals 126, or 'user equipment', to wirelessly connect thereto and communicate with the outside world as true endpoints of the whole communication chain. Alternatively or additionally, the device 119A may support wired connections and contain e.g. LAN, optionally Ethernet, interface for the purpose.

Even traditional consumer electronics 122 (e.g. a set-top box, a television, game console, or an audio or multimedia amplifier/player) may be functionally connected to the device 102 via an intermediate data processing or converting terminal device 119, in a simple case filter, that processes the aggregate downlink signal by, for instance, filtering 115 and/or splitting it into constituent signals (e.g. broadcast and cellular or converted cellular such as Ethernet 115B) all or some of which can be then understood (properly decoded) by the more conventional or otherwise not (fully) compatible consumer electronics 122 that might be disturbed by the signals excessive to the expected ones. The consumer electronics 122 can as well be connected 122A to the traditional socket 120 with filter 122B (when needed) instead of or in addition to data terminal 119. Thus it will easily obtain both the traditional and more advanced services via these connections. Optionally the terminal 119 may support uplink data transfer as well.

The devices 119A, 119 may be configured to filter an aggregate RF signal comprising a plurality of RF signals to multiple constituent signals such as a corresponding plurality of RF signals output via two or more output connectors of the output interface thereof. Correspondingly, a multiplexing/combining functionality may be provided thereat for aggregating a number of input (uplink) signals therewith.

Element 118 refers to an indoor antenna, a leaky cable portion or a corresponding element that wirelessly distributes the broadcast and/or downlink signal and optionally captures the uplink signal between the device 102 and wireless terminals 124 such as LTE or cellular network voice and/or data user terminals. The antenna may be passive or active (with amplification and power consumption).

Generally, in various embodiments of the present invention, the used cabling and related connectors in terminal devices 119, 119A, sockets 120, and device 102 are advantageously selected so as to reduce undesired interference to/from the environment in the light of the information signals conveyed by the cabling. For example, BNC connectors (Bayonet Neill-Concelman), F connectors, and/or Belling-Lee (IEC 169-2) connectors may be applied. For the Ethernet LAN cabling, e.g. RJ45 connectors are applicable.

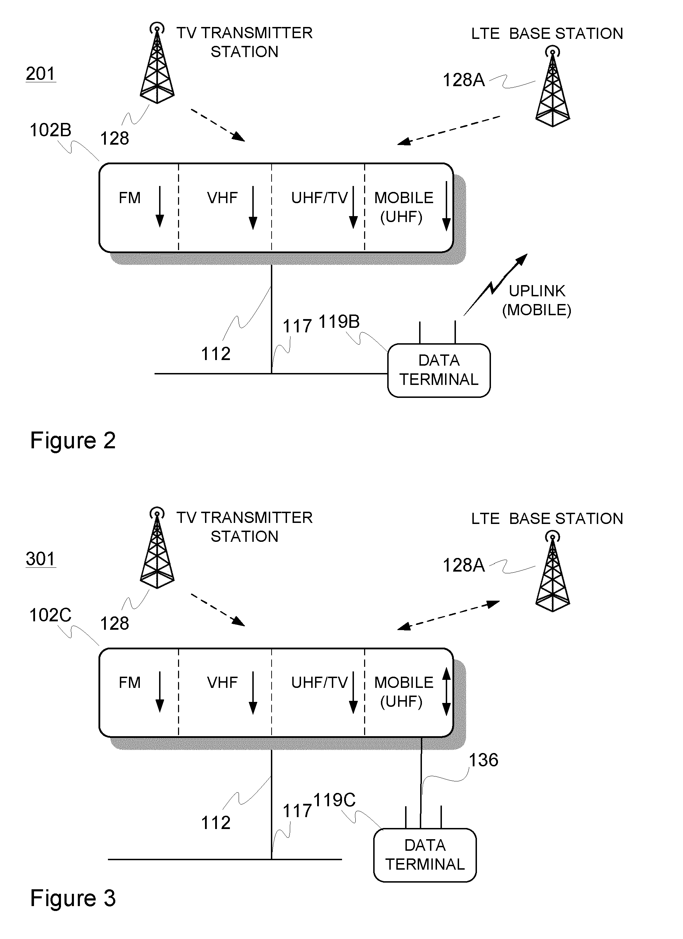

Fig. 2 illustrates a variation of the embodiment of Fig. 1. Generally, the shown scenario is similar to the one of Fig.1, but in this case the cellular uplink, preferably at least LTE, is implemented using a transfer medium and transfer path at least partially different from the downlink direction. Preferably, the LTE compliant terminal device 119B is configured to communicate with a base station 132 outside the building 101a utilizing its internal antenna and not through the electronic device 102B. Even though the signal strength perceived by the external receiving element such as the aforesaid base station 132 may thus turn out modest in contrast to the downlink signal level within the building 101a, in many use scenarios sufficient uplink data transfer rate is also considerably lower than the desired downlink rate, whereupon the greater attenuation of uplink signal in the transmission path between the terminal 119B and the receiving entity 132 is not of equal concern.

Whereas in the scenario of Fig. 1, various elements residing in the transmission path are designed to support also uplink signal, in the solution of Fig. 2 such design constraint is not present and even outdated or mature technology (e.g. televisions) may be utilized for downlink signal reception as such or optionally provided with simple filter (filtering away e.g. LTE signal potentially disturbing the internal electronics of the end device).

Occasionally, cellular network(s) such as the LTE network might obtain distorted measurement reports of the radio environment of the terminal devices when the downlink and uplink paths are different enough as being the case in Fig. 2. Such biased measurements might result in sub-optimum band allocation among the LTE users in the cell(s) concerned. Thereby, in some embodiments e.g. the cellular operators could apply (U)SIM ((Universal) Subscriber Identity Module) card profiling in their service systems (HSS (Home Subscriber Server)/HLR (Home Location Register), for example) such that the identity of the card affects the allocation. In other words, users/cards known to reside in environment with such-like radio path characteristics, the allocation would be at least partially based on hard-coded settings instead of or in addition to dynamic measurements.

Fig. 3 illustrates another variation of the above embodiments. In this embodiment, the distribution interface of the device 102C comprises at least one dedicated interface 136 for cellular or specifically LTE signals excluding the broadcast signals. The other interface carrying the broadcast signal may include or omit the cellular/LTE signal. LTE device(s) 119C such as access points or true terminal devices may be then functionally connected to the interface by means of suitable intermediate elements such as cabling or directly. The interface 136 may include a number of connectors for the cabling, for instance. Alternatively or additionally, it may comprise a wireless transceiver. The interface 136 is preferably bidirectional.

Naturally a person skilled in the art may flexibly and selectively combine the features of various embodiments presented herein. For instance, in a modified embodiment of Fig. 3 the device 102C could support or deal with only downlink signals regarding the dedicated LTE interface 136, whereupon e.g. the internal antennae of indoor LTE terminals could be directly utilized for uplink communication with the outdoor base stations.

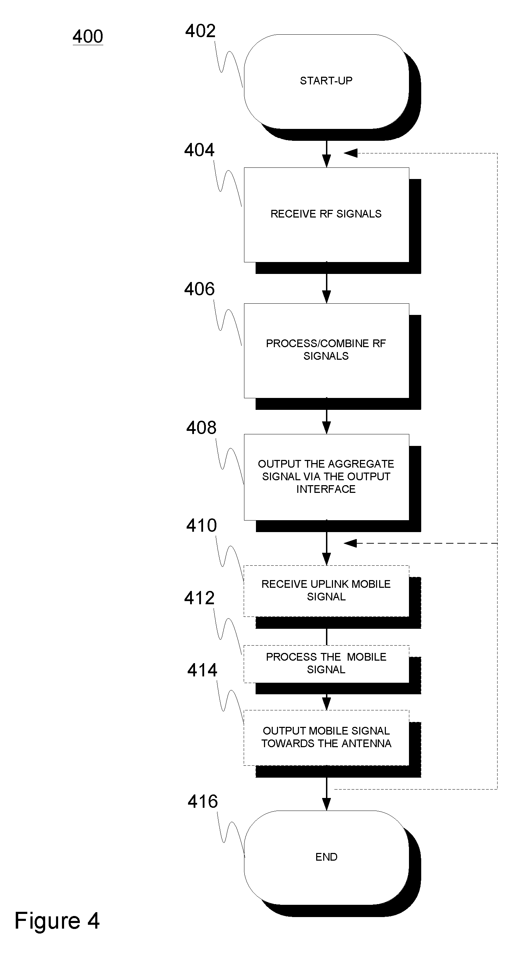

Fig. 4 shows, at 400, a flow diagram of a method in accordance with the present invention.

At start-up 402, the necessary equipment and generally infrastructure to take advantage of the invention, such as an embodiment of the device 102, necessary antenna(e), cabling, terminal device(s), network access, etc., is obtained, installed and configured.

At item 404, the broadcast and cellular signals are received and funneled to the device 102 with appropriate intermediate elements such as diplexers, cables, etc. when necessary.

At 406, the RF signals received are processed such as combined into an aggregate signal as a preparatory action for distribution using a common transfer medium (cable).

At 408, the aggregate signal and/or other signal(s), e.g. dedicated cellular or specifically LTE signal, when applicable, are output via the distribution interface towards the terminal devices.

Dotted rectangles 410-414 are applicable in embodiments in which the device 102 also forwards uplink signals.

At 410, the uplink signal is received, at 412 processed including routing and at 414 output via predetermined connector(s) of the antenna interface.

At 416, the method execution is ended. The dotted loop-back arrows indicate the potentially repetitive nature of method execution regarding the most method items thereof.

It will be apparent to those skilled in the art that the examples related to the preferred embodiments of this invention described above are not meant to limit but merely illustrate the invention. Thus the invention and the embodiments thereof are not strictly restricted to the above described examples, and the embodiments may vary within the scope of the patent claims. Regarding alternative scenarios in which the principles of the present invention could be validly exploited, instead of coaxial television cabling other preferably pre-installed shared cabling could be utilized for signal transfer, e.g. Ethernet or other computer network cabling, or fiber optics.

## Claims

1. A device (101b, 102, 102B, 102C) for indoor (101a) distribution of multiple received information signals, comprising
antenna interface (130, 114a, 116a) for receiving a plurality of RF signals, said plurality of RF signals including a digital terrestrial broadcast television signal and a number of downlink cellular signals including LTE (Long Term Evolution) air interface signal,
signal routing portion (132, 104, 106, 108, 110) for processing the received RF signals, preferably including combining the received RF signals into an aggregate signal, and
distribution interface (134) for distributing the processed signal(s), preferably the aggregate signal, towards a number of terminal devices (119, 119B, 119C) utilizing indoor coaxial cabling (112),
wherein the device has been configured to operate at least in passive mode requiring no dedicated internal or external power source.

2. The device of claim 1, wherein the broadcast signal is DTT (Digital Terrestrial Television) signal, optionally a DVB-T (Digital Video Broadcasting, Terrestrial) or DVB-T2 compliant signal.

3. The device of any preceding claim, said plurality of cellular signals further including at least one other predetermined 3GPP (3rd Generation Partnership Project), optionally 3G, standard compliant air interface signal.

4. The device of claim 3, wherein said standard compliant air interface signal is essentially UMTS, CDMA2000 or GSM EDGE compliant.

5. The device of claim 4, being UTRA-compliant (UMTS Terrestrial Radio Access), optionally W-CDMA (Wideband Code Division Multiple Access).

6. The device of any preceding claim, configured to receive uplink cellular signal, via the distribution interface and output it via the antenna signal interface.

7. The device of any preceding claim, wherein the distribution interface comprises a connector the transfer of processed, at least combined, signals.

8. The device of claim 7, wherein the distribution interface comprises a shared connector for the wired transfer of the processed and uplink signals using shared cabling (112).

9. The device of any preceding claim, wherein the antenna interface comprises a number of connectors for receiving said digital broadcast television signal and downlink cellular signals, wherein a first connector (114a) is used for receiving the broadcast television signal and a second connector (116a) is used for receiving at least one cellular signal, optionally the LTE signal.

10. The device of any preceding claim, wherein the antenna interface comprises a number of antennae (114, 116) for capturing the RF signals.

11. The device of any preceding claim, wherein the signal routing portion comprises at least one element selected from the group consisting of: a combiner, duplexer, coupler, multi-coupler, multiplexer, diplexer, filter, splitter, reversed splitter, echo cancellation circuit, and amplifier.

12. The device of any preceding claim, wherein the device is further configured to operate in active mode with a number of active electronic elements thereof in use, the device further comprising an internal power source or an interface for external power source for powering the active elements.

13. The device of any preceding claim, wherein the distribution interface comprises a dedicated interface (136) for the wired or wireless transfer of cellular, preferably at least LTE, signals.

14. A system for indoor distribution of multiple received information signals comprising a device according to any preceding claim, a number of data terminals (119, 119A, 122, 124, 126) for at least receiving data and/or voice service signals therefrom, and cabling (112, 117, 120) comprising at least one cable, preferably coaxial cable, between them.

15. The system of claim 14, wherein said number of data terminals include a wireless LTE user terminal (124) or LTE-(W)LAN access point (119A).

16. The system of any of claims 14 or 15, wherein said number of data terminals includes a signal processing device (119, 119A) configured to filter (115) or convert (119A) the received signal to a form compatible with user equipment (122, 126).

17. The system of claim 16, wherein the processing device (119A) is configured to convert between LTE and predetermined LAN or WLAN standard signals.

18. The system of claim 16, wherein the processing device (119) is configured to filter (115) away cellular signals from the aggregate signal comprising the broadcast signal and cellular signals and to provide the broadcast signal via an output thereof, and optionally to provide at least one cellular signal of the aggregate signal via another output thereof (115B).

19. The system of any of claims 14-18, further comprising at least one consumer electronics device or home appliance (122), optionally a television set, capable of receiving the broadcast signal and optionally cellular signal or a signal derived based thereon (115B).

20. The system of any of claims 14-19, comprising a leaky cable portion or indoor antenna (118) for wireless signal transmission and optionally capturing of wireless cellular signals, preferably at least LTE signals.

21. The system of any of claims 14-20, configured to provide cellular signals in downlink direction only and at least one terminal (119B) being configured to communicate with a base station (128A) by using its integral antenna in uplink direction.

22. A method (400) for indoor distribution of multiple received information signals to be performed by an electronic device, comprising
obtaining an electronic device for signal distribution between a number of antennae and terminal devices remotely located from the antennae, said electronic device configured to operate at least in passive mode requiring no dedicated internal or external power source,
receiving (404), at the antenna interface of the electronic device, a plurality of RF signals, said plurality of RF signals including a digital terrestrial broadcast television signal, optionally DVB-T(2) compliant signal, and a number of cellular signals including LTE air interface signal and preferably a number of predetermined 3G or other, 3GPP (3rd Generation Partnership Project) standard compliant, air interface signal(s),
processing (406), preferably combining, the received RF signals at the electronic device into an aggregate signal, and
distributing (408), at the distribution interface of the electronic device, the processed signal(s), preferably the aggregate signal, towards a number of terminal devices utilizing coaxial, optionally television, cabling.

23. The method of claim 22, further comprising receiving uplink cellular signal at the distribution interface and conveying it (412, 414) to the antenna interface for radiation and subsequent capture by a base station.
